# EUROPÄISCHE PATENTANMELDUNG

(11) **EP 2 662 608 A2**
(43) Veröffentlichungstag der Anmeldung: **13.11.2013**
(21) Anmeldenummer: 13167117.4
(22) Anmeldetag: 08.05.2013
(51) Int. Cl.: F16L 59/16, F16L 59/22

(54) **Formteil zur Schall-, Kälte- und/oder Wärmedämmung von Rohrleitungselementen**

(30) Priorität: 10.05.2012 DE 202012101709 U
(71) Anmelder: Kolektor Missel Insulations GmbH, 70736 Fellbach (DE)
(72) Erfinder: Graba, Daniel, 71394 Kernen (DE); Engel, Andreas, 75382 Neuhengstett (DE)
(74) Vertreter: Manitz, Finsterwald & Partner GbR

(57) **Zusammenfassung**

Die Erfindung betrifft ein Formteil zur Schall-, Kälte- und/oder Wärmedämmung von Rohrleitungselementen wie Armaturen, Steuer- oder Stelleinrichtungen, wobei das Formteil eine Dämm-Ummantelung mit lediglich einer einzigen Dämmschicht aus Schaumstoff, einer mit dem Schaumstoff verbundenen Schutzschicht und einer Schnellverschlusseinrichtung aufweist.

## Beschreibung

Die Erfindung betrifft ein Formteil zur Schall-, Kälte- und/oder Wärmedämmung von Rohrleitungselementen wie Armaturen, Steuer- oder Stelleinrichtungen.

Es ist bekannt, Formteile zur Wärme- und/oder Schallisolierung von Rohrleitungselementen beispielsweise mittels eines einseitig angeordneten Langschlitzes über entsprechende Rohrleitungsbögen, -winkel oder -abzweigungen zu stülpen und eine lückenlose Isolierung der Rohrleitungen auch im Bereich der Bögen, Winkel und Abzweigungen zu gewährleisten. Die Formteile werden dabei zur Befestigung beispielsweise verklebt.

Zudem ist bekannt, Steuer- und Stelleinrichtungen in Rohrleitungen durch Zuschneiden und Einpassen von schlauchförmigen Formteilen zu dämmen. Das Formteil kann hierbei beispielsweise über eine Druckknopfverbindung an der Steuer- und Stelleinrichtung positioniert werden.

Es ist eine Aufgabe der Erfindung, ein einfach herstell- und montierbares Formteil zur Schall-, Kälte- und/oder Wärmedämmung von Rohrleitungselementen zu schaffen.

Die Aufgabe wird durch ein Formteil mit den Merkmalen des Anspruchs 1 gelöst.

Demnach weist das Formteil eine Dämm-Ummantelung mit einer Dämmschicht aus Schaumstoff, z.B. aus Polyethylen, und einer mit dem Schaumstoff verbundenen Schutzschicht auf. Bei den Armaturen kann es sich beispielsweise um Heizungs- und/oder Trinkwasserarmaturen handeln. Die Steuer- und Stelleinrichtungen sind insbesondere Schrägsitzventile, Kugelhähne, Muffenschieber und/oder Flanschventile. Das Formteil, insbesondere die Schutzschicht, kann ein Polyethylen- oder Polypropylen-Material aufweisen. Die Schutzschicht besteht vorzugsweise aus einem Material mit einer höheren Reißfestigkeit als die Dämmschicht. Auch kann die Dämm-Ummantelung ein Material aus einem temperatur- und/oder feuerbeständigen Material umfassen.

Mithilfe zumindest einer Schnellverschlusseinrichtung ist das Formteil an dem Rohrleitungselement so befestigbar, dass es das Rohrleitungselement zumindest teilweise umschließt, wobei die Schnellverschlusseinrichtung zumindest eine Lasche umfasst, die mit der Schutzschicht verklebt und/oder verschweißt ist.

Unter dem Begriff "Verschweißen" ist in dieser Anmeldung sowohl ein direktes als auch ein indirektes Verschweißen zu verstehen. Bei einem direkten Verschweißen kann z.B. eine Schnellverschlusseinrichtung oder zumindest ein Teil davon direkt mit der Schutzschicht verschweißt werden. Bei einem indirekten Verschweißen kann z.B. an der Schnellverschlusseinrichtung oder zumindest an einem Teil davon zunächst ein Thermoplast angebracht werden, beispielsweise durch Vernähen. Die Schnellverschlusseinrichtung wird hierbei durch Aufbringen von Wärme unter Druck indirekt durch den Thermoplast mit der Schutzschicht verschweißt. Die Schnellverschlusseinrichtung kann mit dem Thermoplast und insbesondere nur mit dem Thermoplast, verklebt und/oder vernäht sein.

Alternativ kann die Aufgabe durch ein Formteil zur Schall-, Kälte- und/oder Wärmedämmung von Rohrleitungselementen wie Rohrabzweigungen, -bögen, -winkel, Armaturen, Steuer- oder Stelleinrichtungen gelöst werden, wobei das Formteil eine Dämm-Ummantelung mit lediglich einer einzigen Dämmschicht aus Schaumstoff, z.B. aus Polyethylen, und einer mit dem Schaumstoff verbundenen Schutzschicht aufweist und mithilfe zumindest einer Schnellverschlusseinrichtung an dem Rohrleitungselement so befestigbar ist, dass es das Rohrleitungselement zumindest teilweise umschließt, wobei die Schnellverschlusseinrichtung zumindest eine Lasche umfasst, die an die Schutzschicht angenäht ist. Das Formteil, insbesondere die Schutzschicht, kann ein Polyethylen- oder Polypropylen-Material aufweisen. Die Schutzschicht besteht vorzugsweise aus einem Material mit einer höheren Reißfestigkeit als die Dämmschicht. Die Dämmschicht kann aus einer einzigen Lage Schaumstoff aufgebaut sein. Es ist jedoch auch denkbar, dass die Dämmschicht mehrere (nur wenige mm dicke) Lagen Schaumstoff umfasst, welche beispielsweise bereits werkseitig durch Laminieren miteinander zu einer einzigen Dämmschicht verbunden sind, die z.B. zwischen etwa 4 und 14 mm dick ist. Auch kann die Dämm-Ummantelung ein Material aus einem temperatur- und/oder feuerbeständigen Material umfassen.

Erfindungsgemäß ist das Formteil mithilfe zumindest einer Schnellverschlusseinrichtung an dem Rohrleitungselement so befestigbar, dass es das Rohrleitungselement zumindest teilweise umschließt, wobei die Schnellverschlusseinrichtung zumindest eine Lasche umfasst, die an die Schutzschicht angenäht ist. Da die Dämmummantelung lediglich eine einzige Dämmschicht mit einer beispielsweise auflaminierten Schutzschicht aufweist, ist die Dämm-Ummantelung besonders einfach und kostengünstig herstellbar. Nach dem Laminieren kann eine Dämm-Ummantelung mit einer gewünschten Form geschnitten werden. Es sind keine zusätzlichen Schichten vorgesehen, weshalb keine weitere Schicht in die Dämm-Ummantelung eingebracht werden muss.

Alternativ kann die Aufgabe durch ein Formteil zur Schall-, Kälte- und/oder Wärmedämmung von Rohrleitungselementen wie Rohrabzweigungen, -bögen, -winkel, Armaturen, Steuer- oder Stelleinrichtungen gelöst werden, wobei das Formteil eine Dämm-Ummantelung mit einer Dämmschicht aus Schaumstoff und einer mit dem Schaumstoff verbundenen Schutzschicht aufweist und mithilfe zumindest einer Schnellverschlusseinrichtung an dem Rohrleitungselement so befestigbar ist, dass es das Rohrleitungselement zumindest teilweise umschließt, wobei die Schnellverschlusseinrichtung zumindest eine Lasche umfasst, die lediglich an die Schutzschicht und nicht an die Dämmschicht angenäht ist.

Die Schutzschicht, welche insbesondere aus einem Material von höherer Reißfestigkeit als die Dämmschicht ausgebildet ist, sorgt somit für einen festen Halt der Schnellverschlusseinrichtung. Die Schnellverschlusseinrichtung wird dabei beispielsweise zunächst auf der Schutzschicht angenäht. Anschließend kann die Schutzschicht mit der Dämmschicht verbunden werden. Dies ist herstellungstechnisch einfacher und günstiger, als die Schnellverschlusseinrichtung z.B. erst nach dem Verkleben an der Schutzschicht und der Dämmschicht anzunähen. Erfindungsgemäß wird bei dieser Ausführungsform die Dämmschicht also nicht mit vernäht.

Die Schnellverschlusseinrichtung kann mittels eines Klett-, Klemm- oder Klebeverschlusses, mittels Haken und Ösen und mittels Druckknöpfen verschließbar sein. Auch eine Kombination verschiedener Schnellver-schlusseinrichtungen ist denkbar.

Die Schnellverschlusseinrichtung ermöglicht eine einfache, werkzeuglose und schnelle Montage des Formteils am Einsatzort. Durch die Wiederverschließbarkeit sind die Armaturen zudem revisionierbar. Aufgrund der Anpassbarkeit kann das Formteil für sämtliche Standardarmaturen verwendet werden. Zudem wird ein guter Sitz an den Armaturen gewährleistet.

Vorteilhafte Ausführungsformen der Erfindung sind in den Unteransprüchen, der Beschreibung und den Zeichnungen beschrieben.

Gemäß einer Ausführungsform weist die Dämm-Ummantelung lediglich eine einzige Dämmschicht aus Schaumstoff und eine mit dem Schaumstoff verbundene Schutzschicht auf. Das Formteil kann somit einfach und kostengünstig hergestellt werden. Dabei kann die Dämmschicht auch mehrere Lagen umfassen, welche beispielsweise werkseitig zu einer einzigen Dämmschicht verbunden werden.

Nach einer weiteren Ausführungsform umfasst die Lasche ein erstes Teil der Schnellverschlusseinrichtung, insbesondere eines Klettverschlusses, das an einem zweiten Teil der Schnellverschlusseinrichtung, insbesondere eines Klettverschlusses, eingreift, wobei das zweite Teil der Schnellverschlusseinrichtung an die Schutzschicht angenäht und/oder mit der Schutzschicht verklebt und/oder verschweißt ist. Die Schnellverschlusseinrichtung besteht somit aus zwei Teilen. Die Lasche des ersten Teils lässt sich mit dem zweiten Teil insbesondere lösbar verbinden. Das zweite Teil der Schnellverschlusseinrichtung ist dabei beispielsweise mithilfe einer Naht an der Schutzschicht angebracht. Es ist auch denkbar, dass das zweite Teil der Schnellverschlusseinrichtung mit der Schutzschicht verklebt und/oder verschweißt ist.

In einer bevorzugten Ausführungsform ist der zweite Teil der Schnellverschlusseinrichtung lediglich an die Schutzschicht und nicht an die Dämmschicht angenäht, damit verklebt und/oder verschweißt. Dies führt zu einer einfachen und kostengünstigen Herstellung. Die Schutzschicht ist vorzugsweise aus einem stabilen und/oder reißfesten Material, sodass die Naht der Schnellverschlusseinrichtung bei normaler, gebrauchsmäßiger Belastung nicht ausreißt.

Alternativ oder zusätzlich kann sich die Lasche des ersten Teils der Schnellverschlusseinrichtung und/oder der zweite Teil der Schnellverschlusseinrichtung zusätzlich zur Näh-, Schweiß- und/oder Klebeverbindung über eine Druckknopf- und/oder Nietverbindung mit der Schutzschicht in Halteingriff befinden.

Nach einer weiteren Ausführungsform ist die Lasche des ersten Teils der Schnellverschlusseinrichtung und/oder der zweite Teil der Schnellverschlusseinrichtung zusätzlich über zumindest eine Verankerungsnaht mit der Dämmschicht vernäht. Die Verankerungsnaht verläuft dabei insbesondere sowohl durch die Schutzschicht als auch durch die Dämmschicht hindurch. Die Schnellverschlusseinrichtung wird somit zusätzlich an der Dämmschicht vor einem Ausreißen gesichert. Die Verbindung zwischen der Schnellverschlusseinrichtung und der Dämm-Ummantelung wird auf diese Weise verstärkt. Dies ist wünschenswert, da beispielsweise beim Lösen einer Klettverschlussverbindung große Kräfte auf die Verbindung zwischen der Schnellverschlusseinrichtung und der Dämm-Ummantelung wirken können.

In einer Weiterbildung umfasst die Verankerungsnaht zumindest eine Punktnaht oder zumindest eine Stegnaht. Die Verbindung zwischen der Schnellverschlusseinrichtung und der Dämm-Ummantelung kann damit punktweise bzw. abschnittsweise verstärkt werden. Unter dem Begriff Stegnaht ist hierbei eine kurze, längliche Naht zu verstehen, welche die Schnellverschlusseinrichtung sowohl mit der Schutzschicht als auch mit der Dämmschicht vernäht. Vorzugsweise erfolgt die Sicherung mithilfe einer Verankerungsnaht lediglich abschnittsweise als zusätzliche Sicherung.

Gemäß einer weiteren Ausführungsform weist eine Befestigungsnaht, mit der die Lasche des ersten Teils der Schnellverschlusseinrichtung und/oder der zweite Teil der Schnellverschlusseinrichtung lediglich an die Schutzschicht angenäht sein kann, an zumindest einem Nahtendbereich eine Verankerungsnaht auf. Insbesondere die Befestigungsnaht wird somit gesichert. Es ist denkbar, dass die Befestigungsnaht beispielsweise den zweiten Teil der Schnellverschlusseinrichtung vollumfänglich vernäht. Die Endbereiche der Befestigungsnaht können dabei zusätzlich je eine Stegnaht aufweisen, um die Befestigungsnaht am Endbereich zu sichern. Zudem kann die Befestigungsnaht an einer oder mehreren Stellen mithilfe einer Punktnaht gesichert werden. Selbiges ist für den Teil der Lasche denkbar, welcher an die Schutzschicht angenäht ist.

Gemäß einer weiteren Ausführungsform bildet die Verankerungsnaht eine Nahtnut in der Dämmschicht. So schneidet beispielsweise eine Stegnaht in die Dämmschicht ein, sodass diese an der Stelle der Verankerungsnaht zusammengedrückt wird und somit an dieser Stelle dünner ist. Die Nahtnut bildet eine Einkerbung, an der die Dämmschicht abgeklappt werden kann. Die Nahtnut kann beispielsweise einen Randbereich der Dämm-Ummantelung aufnehmen. Die Verankerungsnaht erfüllt somit eine Doppelfunktion, da sie sowohl die Verbindung zwischen der Schnellverschlusseinrichtung und der Dämm-Ummantelung sichert als auch auf einfache und kostengünstige Weise eine Nut zur Verfügung stellt.

Gemäß einer weiteren Ausführungsform ist in dem Formteil zumindest eine Öffnung, insbesondere für ein Ventil oder einen Hahn, vorgesehen. Bei dem Ventil oder dem Hahn kann es sich beispielsweise um ein Schrägsitzventil, einen Kugelhahn, einen Muffenschieber oder ein Flanschventil handeln. Die Größe der Öffnung ist dabei insbesondere derart gewählt, dass das Formteil möglichst eng am Ventil oder am Hahn anliegt, um dadurch Temperaturverluste oder Schallausbreitungen an dieser Stelle möglichst gering zu halten. Die Öffnung kann vorzugsweise in das Formteil gestanzt werden.

Nach einer weiteren Ausführungsform mündet ein durch die Dämm-Ummantelung verlaufender Montageschlitz in die Öffnung, wobei der Montageschlitz insbesondere zur Außenseite der Dämm-Ummantelung hin offen ist. Durch diesen Schlitz kann somit bei der Montage ein Ventil oder ein Hahn durch die Dämm-Ummantelung durchgeschoben werden, bis er die Öffnung erreicht.

Bevorzugt ist der Montageschlitz durch die Schnellverschlusseinrichtung verschließbar. Im montierten Zustand ist somit der Montageschlitz geschlossen und der sich darunter befindliche Rohrabschnitt isoliert.

Gemäß einer weiteren Ausführungsform ist das Formteil in der Abwicklung im Wesentlichen rechteckig. Es sind jedoch auch komplexere Formen denkbar, welche an die jeweils zu dämmende Struktur angepasst sind.

In einer Ausführungsform umfasst das Formteil einen Mantelabschnitt und einen zumindest abschnittsweise runden Deckelabschnitt, der über eine gekrümmte Gelenknut abklappbar mit dem Mantelabschnitt verbunden ist. Der Deckelabschnitt kann dabei einstückig mit dem Mantelabschnitt verbunden sein. Es ist jedoch auch denkbar, den Deckelabschnitt und den Mantelabschnitt als separate Bauteile auszubilden und erst nachträglich miteinander zu verbinden. Die Gelenknut weist beispielsweise eine abgerundete V-Form auf und kann insbesondere in die Dämmschicht des Formteils eingefräst sein. Es ist auch denkbar, die Gelenknut mithilfe einer Verankerungsnaht, also einer Naht, die sowohl die Schutzschicht als auch die Dämmschicht miteinander vernäht, herzustellen. Die Gelenknut ist somit einfach und kostengünstig herstellbar. Die Dämmschicht weist an der Stelle der Gelenknut eine geringere Dicke im Vergleich zu der daran angrenzenden Dämmschicht auf. Durch die Gelenknut wird gewährleistet, dass der Deckelabschnitt relativ zum Mantelabschnitt abgewinkelt werden kann, damit das Formteil besser an eine zu dämmende Struktur angepasst werden kann.

Gemäß einer weiteren Ausführungsform weist der Mantelabschnitt einen gekrümmten Randabschnitt auf, an dessen Enden sich im Wesentlichen rechtwinklig dazu geradlinige Randabschnitte erstrecken. In der Abwicklung des Formteils schließen diese geradlinigen Randabschnitte insbesondere einen spitzen Winkel miteinander ein. Der gekrümmte Randabschnitt ist entgegengesetzt zur Gelenknut gekrümmt und weist einen größeren Krümmungsradius als diese auf.

Nach einer weiteren Ausführungsform bildet der Mantelabschnitt bei geschlossener Schnellverschlusseinrichtung einen Kegelstumpf. Der Kegelstumpf weist an seinem einen Ende eine kleine Basis, d.h. eine Öffnung mit einem kleineren Umfang, und an seinem anderen Ende eine große Basis, d.h. eine Öffnung mit einem größeren Umfang, auf. Mithilfe der Schnellverschlusseinrichtung kann das Formteil in Form eines Kegelstumpfes fixiert werden.

Gemäß einer weiteren Ausführungsform ist der Deckelabschnitt bei geschlossener Schnellverschlusseinrichtung mithilfe der Schnellverschlusseinrichtung in einer abgewinkelten Position fixiert. Der Deckelabschnitt wird somit zunächst abgeklappt und anschließend mithilfe der Schnellverschlusseinrichtung am Kegelstumpf befestigt.

Vorzugsweise begrenzt der Deckelabschnitt eine große Basis des Kegelstumpfs zumindest teilweise. Die Öffnung des Kegelstumpfs, welche von den beiden Öffnungen den größeren Umfang aufweist, wird somit durch den Deckelabschnitt teilweise abgedeckt.

Nach einer weiteren Ausführungsform nimmt der Deckelabschnitt in zumindest einer Nahtnut einen Randbereich des Mantelabschnitts auf, wobei sich der Randbereich insbesondere an die Gelenknut anschließt. Der Randbereich des Mantelabschnitts kann dabei beispielsweise abgeschrägt ausgebildet sein, um besser in die Nahtnut eingreifen zu können. Aufgrund der Nahtnut ist ein Teil des Deckelabschnitts abklappbar. Im montierten Zustand befindet sich dieser abklappbare Teil des Deckelabschnitts insbesondere zwischen der Lasche und der Schutzschicht des Mantelabschnitts. Vorzugsweise weist der Deckelabschnitt an zwei Seiten eine Nahtnut auf. Die Nahtnut kann hierbei durch eine Stegnaht gebildet sein.

Gemäß einer weiteren Ausführungsform ist die Dämm-Ummantelung einstückig. Auf diese Weise wird eine einfache und kostengünstige Herstellung gewährleistet. Es ist jedoch auch denkbar, die Dämm-Ummantelung aus mehreren Einzelteilen herzustellen, welche beispielsweise miteinander verklebt und/oder vernäht werden.

Nach einer weiteren Ausführungsform umfasst die Schutzschicht eine Folie aus einem robusten, reißfesten und/oder wasserabweisenden Material, z.B. Polyethylen oder Polypropylen, insbesondere eine Gewebefolie mit Gitterstruktur oder eine reißfeste, aber flexible Kunststofffolie. Auch eine feuerbeständige Schicht ist denkbar. Aufgrund der robusten und reißfesten Ausgestaltung ist die Schnellverschlusseinrichtung fest mit der Schutzschicht vernäht und vor einem Ausreißen weitgehend geschützt.

Gemäß einer weiteren Ausführungsform ist im montierten Zustand ein Montageschlitz und/oder ein Stoß, der durch aneinander grenzende Endbereiche der Dämm-Ummantelung gebildet wird, durch die Schnellverschlusseinrichtung verschlossen und zusätzlich verklebt und/oder verschweißt. Die Schlitze und Stöße sind auf diese Weise versiegelt. Auch wird somit eine dauerhafte Montage des Formteils ermöglicht.

Nach einer weiteren Ausführungsform ist im montierten Zustand über der Schnellverschlusseinrichtung ein Dichtband aufgeklebt und/oder aufgeschweißt. Der Verschluss wird somit zusätzlich gesichert und/oder abgedichtet.

Nachfolgend wird die vorliegende Erfindung rein beispielhaft anhand vorteilhafter Ausführungsformen unter Bezugnahme auf die beigefügten Zeichnungen beschrieben. Es zeigen:
- Fig. 1a: eine Abwicklung der Innenseite einer erfindungsgemäßen Vorrichtung gemäß einer ersten Ausführungsform;
- Fig. 1b, c: Schnittansichten der Vorrichtung gemäß Fig. 1a;
- Fig. 2a: eine Abwicklung der Außenseite der erfindungsgemäßen Vorrichtung gemäß Fig. 1a;
- Fig. 2b, c: Detailansichten einer Naht der Vorrichtung gemäß Fig. 2a in zwei verschiedenen Ausführungsformen;
- Fig. 3a: eine Seitenansicht der erfindungsgemäßen Vorrichtung gemäß Fig. 1a im geschlossenen Zustand;
- Fig. 3b: eine Schnittansicht der Vorrichtung gemäß Fig. 3a;
- Fig. 4a: eine Abwicklung der Außenseite einer erfindungsgemäßen Vorrichtung gemäß einer zweiten Ausführungsform;
- Fig. 4b: eine Seitenansicht der Vorrichtung gemäß Fig. 4a;
- Fig. 5a: eine Draufsicht einer erfindungsgemäßen Vorrichtung gemäß einer dritten Ausführungsform im geschlossenen Zustand;
- Fig. 5b: eine Schnittansicht der Vorrichtung gemäß Fig. 5a;
- Fig. 6: eine Draufsicht einer erfindungsgemäßen Vorrichtung gemäß einer vierten Ausführungsform im geschlossenen Zustand; und
- Fig. 7: eine Draufsicht einer erfindungsgemäßen Vorrichtung gemäß einer fünften Ausführungsform im geschlossenen Zustand.

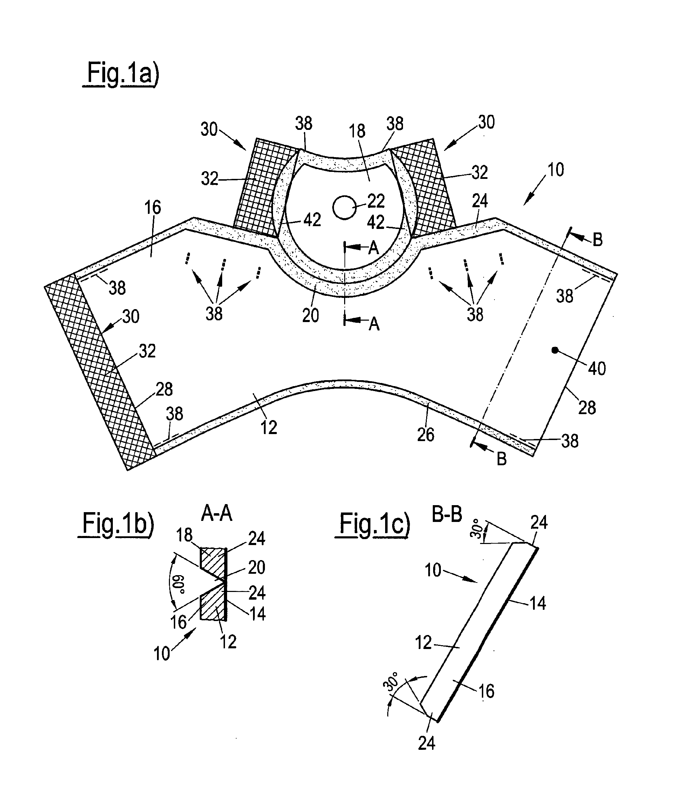

Fig. 1a zeigt eine Innenseite eines Formteils zur Schall-, Kälte- und/oder Wärmedämmung von Rohrleitungselementen. Damit können beispielsweise Armaturen von DN 15 bis DN32 gedämmt werden. Das Formteil umfasst eine Dämm-Ummantelung 10 mit einer Dämmschicht 12 aus Schaumstoff. Die Dämmschichtdicke ist beispielsweise derart gewählt, dass sie den gesetzlichen Anforderungen der EnEV2009 entspricht. Die Dämmschicht 12 ist mit einer Schutzschicht 14, beispielsweise durch Laminieren, verbunden, welche in den Schnittansichten gemäß Fig. 1b und Fig. 1c gezeigt ist. Zusätzlich zur Klebeverbindung kann die Schutzschicht 14 beispielsweise mit der Dämmschicht 12 vernäht sein.

Das Formteil weist einen Mantelabschnitt 16 und einen Deckelabschnitt 18 auf, wobei letzterer über eine gekrümmte Gelenknut 20 mit dem Mantelabschnitt 16 verbunden ist. Eine derartige Gelenknut 20 ist rein optional, d.h. der Mantelabschnitt 16 und der Deckelabschnitt 18 können auch einstückig ausgebildet sein und eine ebene Fläche bilden. Der Deckelabschnitt 18 ist zumindest bereichsweise rund und verfügt über eine zentrale Öffnung 22 mit einem Durchmesser von etwa 15 mm. Die Krümmung des Deckelabschnitts 18 kann an der Stelle der optionalen Gelenknut 20 der Krümmung des Mantelabschnitts 16 entsprechen. Da sowohl die Kanten 24 des Deckelabschnitts 18 als auch die Kanten 24 des Mantelabschnitts 16 abgeschrägt sein können (siehe Fig. 1c), ergibt sich an der Gelenknut 20 eine V-förmige Vertiefung, welche beispielsweise einen Winkel von 60 Grad einschließt (siehe Fig. 1b). An der Stelle der Gelenknut 20 können der Mantelabschnitt 16 und der Deckelabschnitt 18 nahezu ausschließlich über die Schutzschicht 14 miteinander verbunden sein. Alternativ ist es auch möglich, dass die Kanten 24 des Mantelabschnitts 16 nicht abgeschrägt sind. Eine V-förmige Vertiefung ergibt sich hierbei nicht.

Der Mantelabschnitt 16 weist einen gekrümmten Randabschnitt 26 auf. An dessen Enden erstrecken sich rechtwinklig dazu geradlinige Randabschnitte 28, welche miteinander einen spitzen Winkel einschließen. Insbesondere kann der gekrümmte Randabschnitt 26 dabei entgegengesetzt zur Gelenknut 20 gekrümmt sein und der Krümmungsradius des gekrümmten Randabschnitts 26 kann größer als der Krümmungsradius der Gelenknut 20 sein.

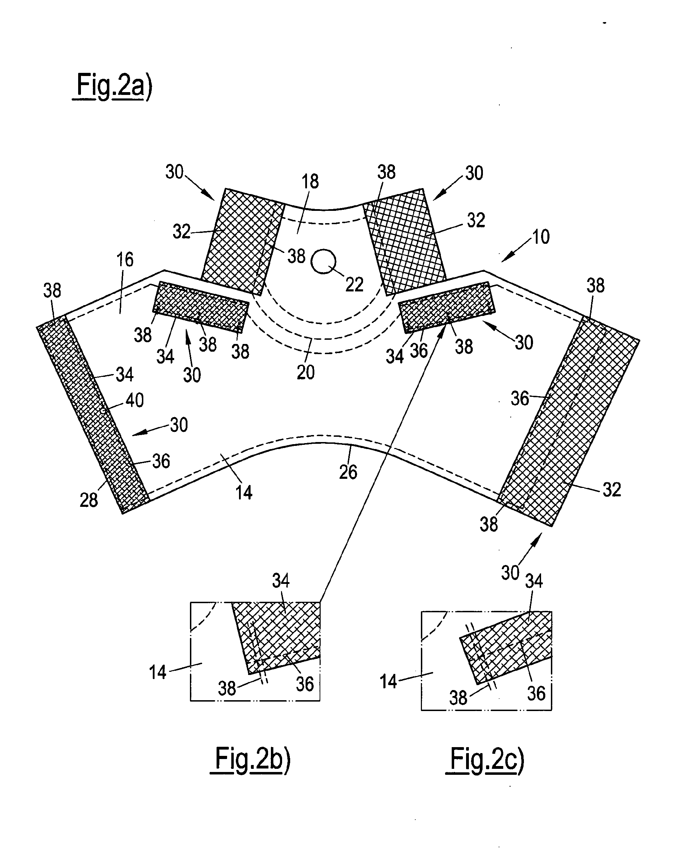

Wie in Fig. 2a gezeigt, sind an der Schutzschicht 14 der Dämmummantelung 10 Klettverschlüsse 30 angenäht, welche als Schnellverschlusseinrichtung 30 dienen. Die Klettverschlüsse 30 können zusätzlich oder alternativ mit der Schutzschicht 14 verklebt und/oder verschweißt sein. Eine Lasche 32, welche einen ersten Teil 32 der Schnellverschlusseinrichtung 30 bildet, kann dabei mit einem zweiten Teil 34 der Schnellverschlusseinrichtung 30 lösbar verbunden werden.

Der Mantelabschnitt 16 verfügt über eine Lasche 32, welche mit der Schutzschicht 14 mithilfe einer Befestigungsnaht 36 (Fig. 2a) vernäht ist. Alternativ oder zusätzlich kann die Lasche 32 auch mit der Schutzschicht 14 verklebt und/oder verschweißt sein. An den Enden kann die Befestigungsnaht 36 jeweils über eine Verankerungsnaht 38 verfügen, welche zusätzlich mit der Dämmschicht 12 vernäht sein kann. Die Lasche 32 des Klettverschlusses 30 kann somit zusätzlich gesichert werden.

Auch die zweiten Teile 34 sind mit dem Mantelabschnitt 16 über eine Befestigungsnaht 36 mit der Schutzschicht 14 vernäht bzw. verklebt und/oder verschweißt. Insbesondere können die zweiten Teile 34 zudem über Verankerungsnähte 38 gesichert sein. Dies ist in Fig. 2b beispielhaft vergrößert dargestellt. Eine Befestigungsnaht 36, welche hierbei an einem Randbereich des zweiten Teils 34 verläuft, wird durch eine Stegnaht 38 gesichert. In Fig. 2c ist eine Alternative dargestellt, bei der die Befestigungsnaht 36 zentral durch das zweite Teil 34 verläuft. Eine Stegnaht 38 kann hierbei das zweite Teil 34 zusätzlich an der Dämmschicht 12 verankern.

Die zweiten Teile 34 des Klettverschlusses 30 können auch eine Punktnaht 40 aufweisen, welche den Klettverschluss 30 mit der Dämmschicht 12 vernäht. Die rein optionalen Stegnähte 38 sowie die ebenfalls optionale Punktnaht 40 sind auch in Fig. 1a gezeigt.

Auch die beiden Laschen 32 des Deckelabschnitts 18 können sowohl mit der Schutzschicht 14 als auch mit der Dämmschicht 12 vernäht sein. Die Stegnähte 38 können hierbei eine Nahtnut 42 bilden. An der Stelle der Nahtnut 42 kann ein Teil des Deckelabschnitts 18 abgeklappt werden. Die Nahtnut 42 ist zudem dazu geeignet, eine Kante 24 des Mantelabschnitts 16, welche sich an die Gelenknut 20 anschließt, aufzunehmen. Auch ohne eine Nahtnut 42 bzw. Gelenknut 20 kann aufgrund der Kompressibilität und Flexibilität des verwendeten Materials ein Teil des Deckelabschnitts 18 abgeklappt werden.

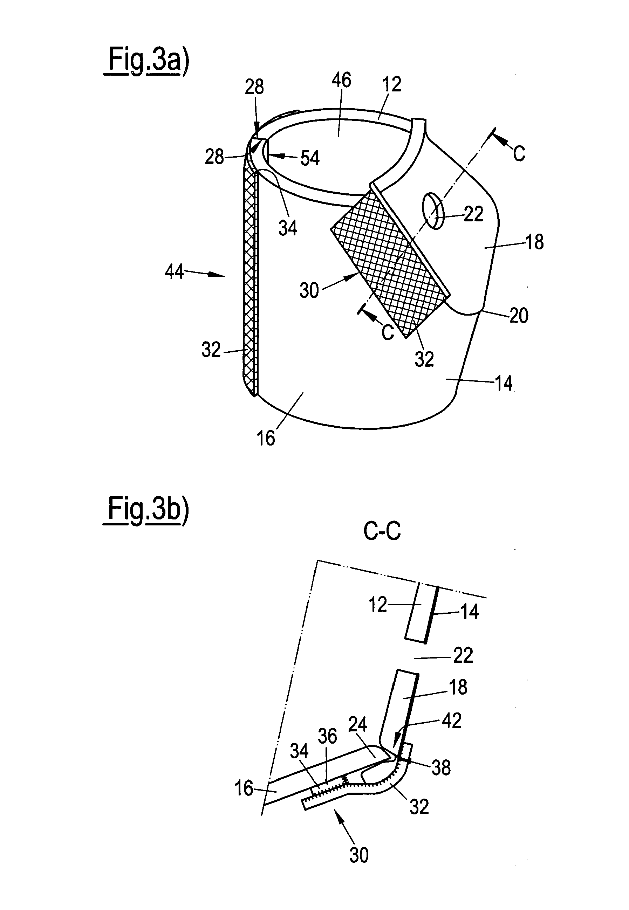

In Fig. 3a ist der montierte Zustand des Formteils gezeigt. Der Mantelabschnitt 16 wird hierbei derart gebogen, dass sich die geradlinigen Randabschnitte 28 an einem Stoß 54 berühren. Die Lasche 32 des Klettverschlusses 30 wird anschließend mit dem zweiten Teil 34 des Klettverschlusses 30 in Eingriff gebracht. Der Mantelabschnitt 16 wird auf diese Weise durch den Klettverschluss 30 in dieser Position fixiert und bildet einen Kegelstumpf 44. Der Deckelabschnitt 18 wird an der Gelenknut 20 bzw. an einer entsprechenden Stelle abgeklappt und in dieser abgewinkelten Position mithilfe des Klettverschlusses 30 gesichert. Der Deckelabschnitt 18 begrenzt dadurch eine große Basis 46 des Kegelstumpfs 44.

Fig. 3b zeigt eine Schnittansicht des Kegelstumpfs 44 gemäß Fig. 3a in einer Ausführungsform, in welcher eine Nahtnut 42 vorgesehen ist. Die Verankerungsnaht 38, mit der die Lasche 32 mit der Schutzschicht 14 und der Dämmschicht 12 des Deckelabschnitts 18 fixiert ist, bildet dabei eine Nahtnut 42. Eine Kante 24 des Mantelabschnitts 16 greift in die Nahtnut 42 ein. Der Deckelabschnitt 18 ist über die Lasche 32 gesichert, welche mit dem zweiten Teil 34 des Klettverschlusses 30 lösbar verbunden ist. Ein Teil der Dämm-Ummantelung 10 des Deckelabschnitts 18 klappt dabei um und befindet sich zwischen dem Mantelabschnitt 16 und der Lasche 32.

Falls keine Nahtnut 42 vorgesehen ist, verformt sich ein Teil der Dämm-Ummantelung 10 des Deckelabschnitts 18. Dieser wird insbesondere zwischen dem Klettverschluss 30 und dem Mantelabschnitt 16 komprimiert.

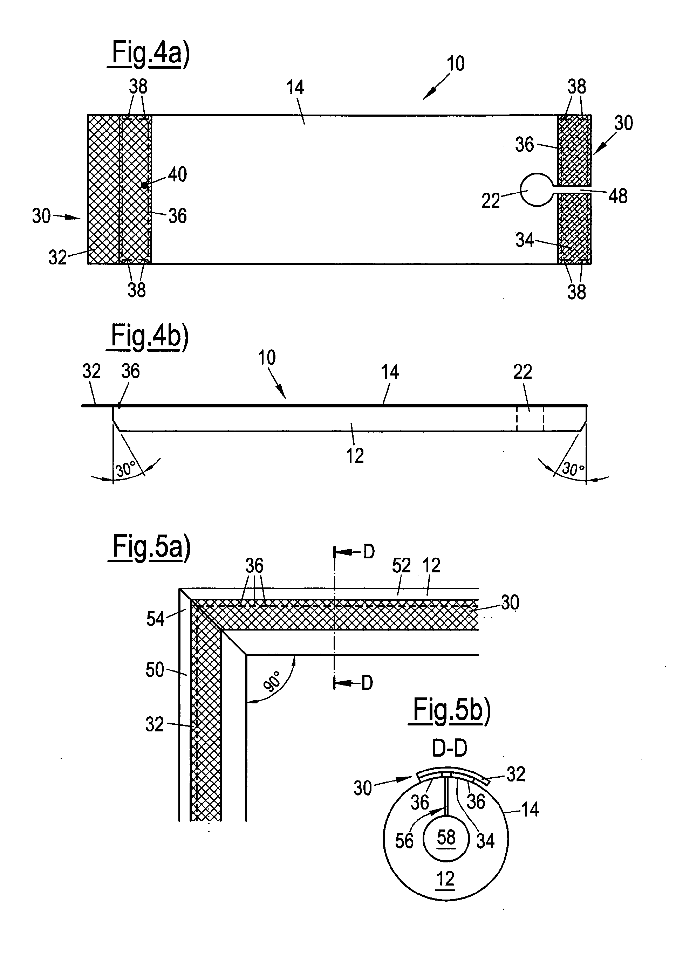

Fig. 4a und 4b zeigen eine zweite Ausführungsform der Erfindung. Das Formteil hat hierbei eine rechteckige Grundstruktur. An dem einen Ende befindet sich eine Lasche 32, welche über eine Befestigungsnaht 36 mit der Schutzschicht 14 vernäht ist. Alternativ oder zusätzlich kann die Lasche 32 mit der Schutzschicht 14 verklebt und/oder verschweißt sein. Zur Sicherung können zudem Stegnähte 38 sowie eine Punktnaht 40 vorhanden sein. Auch der zweite Teil 34 des Klettverschlusses 30 kann über eine Befestigungsnaht 36 sowie über Verankerungsnähte 38 verfügen, wobei alternativ oder zusätzlich auch möglich ist, dass dieser verklebt und/oder verschweißt ist. Eine Öffnung 22 ist über einen Montageschlitz 48 zugänglich. Bei der Montage kann somit beispielsweise ein Hahn oder ein Ventil durch den Montageschlitz 48 zur Öffnung 22 geführt werden. Im montierten Zustand wird der Montageschlitz 48 durch die Schnellverschlusseinrichtung 30 verschlossen. Die beiden Endbereiche der Dämm-Ummantelung 10, an denen die Schnellverschlusseinrichtung 30 befestigt ist, berühren sich hierbei an einem Stoß.

Fig. 5a und 5b zeigen eine dritte Ausführungsform der Erfindung. Das winkelförmige Formteil besteht hierbei aus einem ersten Ummantelungsstück 50 und einem zweiten Ummantelungsstück 52. Die Ummantelungsstücke 50, 52 sind an einem Stoß 54 miteinander verbunden. Am Stoß 54 kann insbesondere ein Klebstoff eingebracht werden, um die Ummantelungsstücke 50, 52 miteinander zu verbinden. Die Ummantelungsstücke 50, 52 sind an jeweils einem Ende um 45 Grad abgeschrägt, sodass sie zusammen einen Winkel von 90 Grad einschließen.

Zur Montage werden die Ummantelungsstücke 50, 52 jeweils an einem Rohrschlitz 56 geöffnet. Anschließend wird ein Rohr hindurchgeführt, bis dieses in einem Rohrloch 58 aufgenommen wird. Darauf wird der Rohrschlitz 56 geschlossen und mithilfe des Klettverschlusses 30 fixiert. Der erste und der zweite Teil 32, 34 des Klettverschlusses 30 sind jeweils über eine Befestigungsnaht 36 mit der Schutzschicht 14 vernäht und können zudem oder alternativ mit der Schutzschicht 14 verschweißt und/oder verklebt sein.

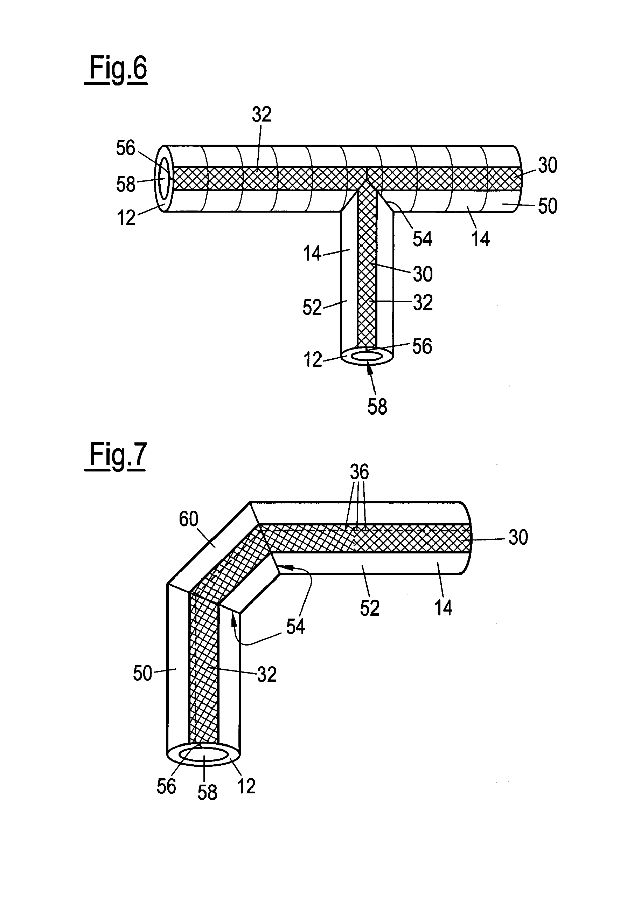

In Fig. 6 bilden ein erstes Ummantelungsstück 50 und ein zweites Ummantelungsstück 52 ein T-Stück. Die Montage erfolgt hierbei analog zur Ausführungsform gemäß Fig. 5a und 5b. Am Stoß 54 sind die beiden Ummantelungsstücke 50, 52 z.B. miteinander verklebt.

Ein weiteres Ausführungsbeispiel ist in Fig. 7 gezeigt. Das erste und das zweite Ummantelungsstück 50, 52 sind hierbei über Stöße 54 mit einem Trapezstück 60 verklebt. Das Formteil ist somit insgesamt bogenförmig. Die Ummantelungsstücke 50, 52 schließen zusammen einen Winkel von 90 Grad ein. Die Montage erfolgt auch hier analog zur Ausführungsform gemäß Fig. 5a und 5b.

Bei allen Ausführungsformen ist auch denkbar, dass die Klettverschlüsse 30 alternativ oder zusätzlich zur Befestigungsnaht 36 mit der Schutzschicht 14 verklebt und/oder verschweißt sind. Das Verschweißen kann hierbei direkt oder indirekt, z.B. mittels eines Streifens aus einem Thermoplast, erfolgen. Die Klettverschlüsse 30 können hierbei mit dem Thermoplasten verklebt und/oder vernäht sein. Wenn der Klettverschluss nur mit dem Thermoplaststreifen vernäht ist, wird eine glatte Oberfläche der Dämmschicht erzielt, was insbesondere bei größeren Schichtdicken vorteilhaft ist.

Auch kann Klebstoff in die Rohrschlitze 56, Montageschlitze 48 und/oder Stöße 54 eingebracht werden, um die daran angrenzenden Abschnitte miteinander zu verkleben und/oder die Schlitze 56, 48 bzw. Stöße 54 zu versiegeln.

Alternativ oder zusätzlich kann auch über zumindest einem Klettverschluss 30 ein Dichtband aufgeklebt und/oder aufgeschweißt werden, um die Verbindung zusätzlich abzudichten.

Die Klettverschlüsse 30 können Signalfarben wie beispielsweise rot, orange oder gelb aufweisen. Dies erleichtert die Montage und Demontage in schlecht beleuchteten Räumen.

### Bezugszeichenliste

- 10: Dämm-Ummantelung
- 12: Dämmschicht
- 14: Schutzschicht
- 16: Mantelabschnitt
- 18: Deckelabschnitt
- 20: Gelenknut
- 22: Öffnung
- 24: Kante
- 26: gekrümmter Randabschnitt
- 28: geradliniger Randabschnitt
- 30: Klettverschluss, Schnellverschlusseinrichtung
- 32: Lasche, erster Teil
- 34: zweiter Teil
- 36: Befestigungsnaht
- 38: Verankerungsnaht, Stegnaht
- 40: Punktnaht
- 42: Nahtnut
- 44: Kegelstumpf
- 46: große Basis
- 48: Montageschlitz
- 50: erstes Ummantelungsstück
- 52: zweites Ummantelungsstück
- 54: Stoß
- 56: Rohrschlitz
- 58: Rohrloch
- 60: Trapezstück

## Patentansprüche

1. Formteil zur Schall-, Kälte- und/oder Wärmedämmung von Rohrleitungselementen wie Rohrabzweigungen, -bögen, -winkel, Armaturen, Steuer- oder Stelleinrichtungen, wobei das Formteil eine Dämm-Ummantelung (10) mit einer Dämmschicht (12) aus Schaumstoff und einer mit dem Schaumstoff verbundenen Schutzschicht (14) aufweist und mithilfe zumindest einer Schnellverschlusseinrichtung (30) an dem Rohrleitungselement so befestigbar ist, dass es das Rohrleitungselement zumindest teilweise umschließt, wobei die Schnellverschlusseinrichtung (30) zumindest eine Lasche (32) umfasst, die mit der Schutzschicht (14) verklebt und/oder verschweißt ist, insbesondere über einen mit der Lasche (32) verklebten und/oder vernähten Thermoplast.

2. Formteil nach Anspruch 1,
**dadurch gekennzeichnet, dass** die Dämm-Ummantelung (10) lediglich eine einzige Dämmschicht (12) aus Schaumstoff und eine mit dem Schaumstoff verbundene Schutzschicht (14) aufweist.

3. Formteil Anspruch 1 oder 2,
**dadurch gekennzeichnet, dass** die Lasche (32) ein erstes Teil der Schnellverschlusseinrichtung (30), insbesondere eines Klettverschlusses, umfasst, das an einem zweiten Teil (34) der Schnellverschlusseinrichtung (30), insbesondere eines Klettverschlusses, eingreift, wobei das zweite Teil (34) der Schnellverschlusseinrichtung (30) mit der Schutzschicht (14) verklebt und/oder verschweißt ist, insbesondere über einen mit dem zweiten Teil (34) verklebten und/oder vernähten Thermoplast, wobei vorzugsweise das zweite Teil (34) der Schnellverschlusseinrichtung (30) lediglich mit der Schutzschicht (14), oder lediglich mit dem Thermoplast, und nicht mit der Dämmschicht (12) verklebt und/oder verschweißt ist.

4. Formteil nach Anspruch 3,
**dadurch gekennzeichnet, dass** die Lasche (32) des ersten Teils der Schnellverschlusseinrichtung (30) und/oder der zweite Teil (34) der Schnellverschlusseinrichtung (30) zusätzlich über zumindest eine Verankerungsnaht (38) mit der Dämmschicht (12) vernäht ist, wobei insbesondere die Verankerungsnaht zumindest eine Punktnaht (40) oder zumindest eine Stegnaht (38) umfasst und/oder die Verankerungsnaht (38) eine Nahtnut (42) in der Dämmschicht (12) bildet.

5. Formteil nach zumindest einem der vorstehenden Ansprüche,
**dadurch gekennzeichnet, dass** in dem Formteil zumindest eine Öffnung (22), insbesondere für ein Ventil oder einen Hahn, vorgesehen ist.

6. Formteil nach Anspruch 5,
**dadurch gekennzeichnet, dass** ein durch die Dämm-Ummantelung (10) verlaufender Montageschlitz (48) in die Öffnung (22) mündet, wobei der Montageschlitz (48) insbesondere zur Außenseite der Dämm-Ummantelung (10) hin offen ist, wobei vorzugsweise der Montageschlitz (48) durch die Schnellverschlusseinrichtung (30) verschließbar ist.

7. Formteil nach zumindest einem der vorstehenden Ansprüche,
**dadurch gekennzeichnet, dass** das Formteil einen Mantelabschnitt (16) und einen zumindest abschnittsweise runden Deckelabschnitt (18) umfasst, der, insbesondere einstückig, über eine gekrümmte Gelenknut (20) abklappbar mit dem Mantelabschnitt (16) verbunden ist.

8. Formteil nach Anspruch 7,
**dadurch gekennzeichnet, dass** der Mantelabschnitt (16) einen gekrümmten Randabschnitt (26) aufweist, an dessen Enden sich im Wesentlichen rechtwinklig dazu geradlinige Randabschnitte (28) erstrecken, wobei der gekrümmte Randabschnitt (26) entgegengesetzt zur Gelenknut (20) gekrümmt ist und einen größeren Krümmungsradius als diese aufweist.

9. Formteil nach Anspruch 7 oder 8,
**dadurch gekennzeichnet, dass** der Mantelabschnitt (16) bei geschlossener Schnellverschlusseinrichtung (30) einen Kegelstumpf (44) bildet.

10. Formteil nach Anspruch 9,
**dadurch gekennzeichnet, dass** der Deckelabschnitt (18) bei geschlossener Schnellverschlusseinrichtung (30) mithilfe der Schnellverschlusseinrichtung (30) in einer abgewinkelten Position fixiert ist, wobei insbesondere der Deckelabschnitt (18) eine große Basis (46) des Kegelstupfs (44) zumindest teilweise begrenzt.

11. Formteil nach Anspruch 10,
**dadurch gekennzeichnet dass** der Deckelabschnitt (18) in zumindest einer Nahtnut (42) einen Randbereich des Mantelabschnitts (16) aufnimmt, wobei sich der Randbereich insbesondere an die Gelenknut (20) anschlief3t.

12. Formteil nach zumindest einem der vorstehenden Ansprüche,
**dadurch gekennzeichnet dass** die Dämm-Ummantelung (10) einstückig ist.

13. Formteil nach zumindest einem der vorstehenden Ansprüche,
**dadurch gekennzeichnet dass** die Schutzschicht (14) eine Folie aus einem robusten, reißfesten und/oder wasserabweisendem Material umfasst, insbesondere eine Gewebefolie mit Gitterstruktur oder eine reißfeste, aber flexible Kunststofffolie.

14. Formteil nach zumindest einem der vorstehenden Ansprüche,
**dadurch gekennzeichnet dass** im montierten Zustand ein Montageschlitz (48) und/oder ein Stoß (54), der durch aneinander grenzende Endbereiche der Dämm-Ummantelung (10) gebildet wird, durch die Schnellverschlusseinrichtung (30) verschlossen und zusätzlich verklebt und/oder verschweißt ist.

15. Formteil nach zumindest einem der vorstehenden Ansprüche,
**dadurch gekennzeichnet dass** im montierten Zustand über der Schnellverschlusseinrichtung (30) ein Dichtband aufgeklebt und/oder aufgeschweißt ist.
